# EUROPEAN PATENT SPECIFICATION

(11) **EP 2 448 706 B1**
(45) Date of publication and mention of the grant of the patent: **12.02.2020**
(21) Application number: 10794464.7
(22) Date of filing: 02.07.2010
(51) Int. Cl.: B23D 61/12, B26B 9/02

(54) **SAW BLADE AND SAW**
SÄGEBLATT UND SÄGE
LAME DE SCIE ET SCIE

(30) Priority: 02.07.2009 SE 0950520
(43) Date of publication of application: 09.05.2012
(73) Proprietor: Kapman AB, 811 81 Sandviken (SE)
(72) Inventor: SJÖHOLM, Henrik, S-821 51 Bollnäs (SE)
(74) Representative: Groth & Co. KB
(86) International application number: PCT/SE2010/050768
(87) International publication number: WO 2011/002411

(56) References cited:
- DE-U1- 9 307 680
- GB-A- 2 000 118
- GB-A- 2 449 943
- US-A1- 2005 139 049
- US-A1- 2010 180 452
- US-B1- 6 532 852

## Description

The present invention relates to a saw blade as per the preamble of claim 1.

### Prior Art

The American patent application with publication number US, A1, 2005/0139049 discloses systems and methods to cut/saw corrugated material of multi-layer type. This document discloses a saw blade as per the preamble of claim 1. There is found a band saw blade having a wavelike edge that is chamfered and set. The blade is considered to decrease the generation of dust during sawing in comparison with what is the case when sawing using a circular sawing machine. However, the generation of dust is still too great.

### Summary of the Invention

A first object of the present invention is to provide a saw blade that causes minimal dust generation during sawing of, for instance, insulating material. A second object of the present invention is to provide a saw that is equipped with a saw blade according to the invention. Thus, the invention embraces a saw blade having teeth, at least one of said teeth being set and said teeth having at least one continuously continuous sharp edge that is common to the teeth and, in a main plane of extension of the saw blade and prior to setting, has either a pure sinusoidal shape or a modified sinusoidal shape, whereby the sharp edge is wave-shaped and lacks sudden sharp local direction changes along the extension of the saw blade.

The modified sinusoidal shape may partly have a different amplitude than the pure sinusoidal shape. The modified sinusoidal shape may partly have a different frequency or a different wavelength than the pure sinusoidal shape. The modified sinusoidal shape may partly have a different amplitude and a different frequency or a different wavelength than the pure sinusoidal shape.

At least one of said teeth may be set in one direction and at least one of said teeth may be set in the other direction. Every second tooth of said teeth may be set in one direction and every second tooth of said teeth may be set in the other direction. In a group of three sequencing teeth of said teeth, one tooth may be set in one direction, one tooth be set in the other direction and one tooth be unset. In a group of four sequencing teeth of said teeth, one tooth may be set in one direction, one tooth be set in the other direction and two teeth be unset. In a group of four sequencing teeth of said teeth, a first tooth may be unset, a second tooth be set in one direction, a third tooth be unset and a fourth tooth be set in the other direction.

Thus, the invention also embraces a saw comprising at least one saw blade according to the above. The saw may comprise at least one handle for handsawing. Said at least one saw blade may be detachable from said at least one handle. The saw may comprise equipment for machine sawing.

### List of Figures

Figure 1a shows, in a schematic view from above, a saw blade according to the invention, setting not being shown.
Figure 1b shows, in a side view, the saw blade according to Figure 1a supplemented with a partial enlargement and setting being shown.
Figure 1c shows, in a front view, a variant of the saw blade according to Figure 1a supplemented with a partial enlargement and setting being shown.
Figure 2 shows, in a side view, an alternative saw blade according to the invention and supplemented with a partial enlargement, occurring setting not being shown.

### Description of Embodiments

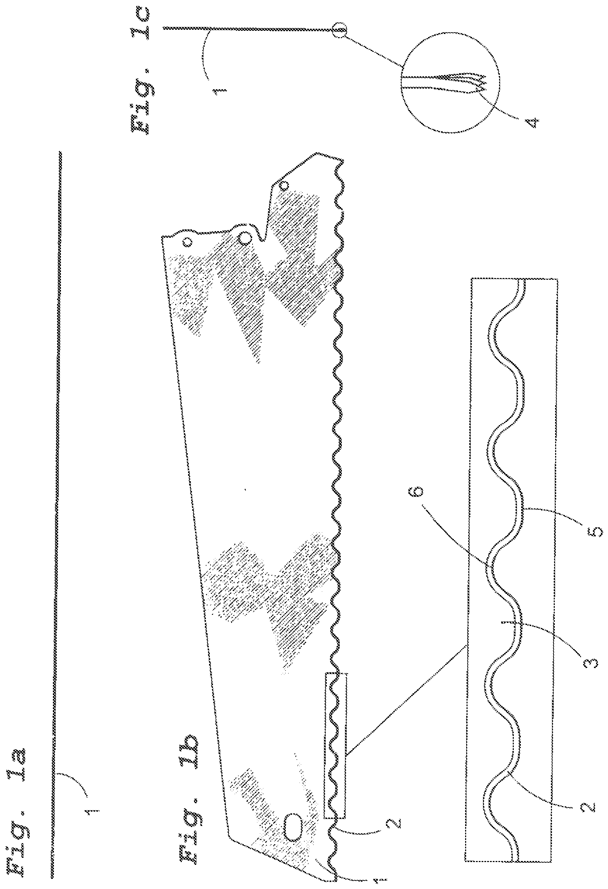

A first embodiment of a saw blade according to the invention is seen in the Figures 1a and 1b. A saw blade 1 has a wave-shaped edge 2 with teeth 3. The edge 2 is chamfered to a sharp cutting edge 4 that runs in the entire length of the saw blade 1.

The edge 2 has, in a main plane of extension of the saw blade 1 and prior to setting of the teeth 3, a modified sinusoidal shape. The modification of the sinusoidal shape is such that the teeth 3 have ridges 5 on which said edge 2 is more extended in the main direction of extension of the edge than what corresponds to a pure sinusoidal shape of the edge at the same time as said teeth 3 have intermediate valleys 6 in which said edge 2 is more extended in the main direction of extension of the edge than what corresponds to a pure sinusoidal shape of the edge. From the partial enlargement in Figure 1b, it is seen that the edge 2 is more extended in the main direction of extension of the edge in the crest of each ridge 5 than the edge 2 is in the bottom of each valley 6. In the transition between each ridge 5 and valley 6, the edge 2 has a local direction of extension that is angled approx. 45° to the main direction of extension of the edge.

It should be observed that a second embodiment instead may have an edge 2 that is more extended in the main direction of extension of the edge in the bottom of each valley 6 than the edge 2 is in the crest of each ridge 5. A third embodiment may have an edge 2 that is as extended in the main direction of extension of the edge in the bottom of each valley 6 as in the crest of each ridge 5. A fourth embodiment may have an edge 2 that is not extended, i.e., the edge has a pure sinusoidal shape.

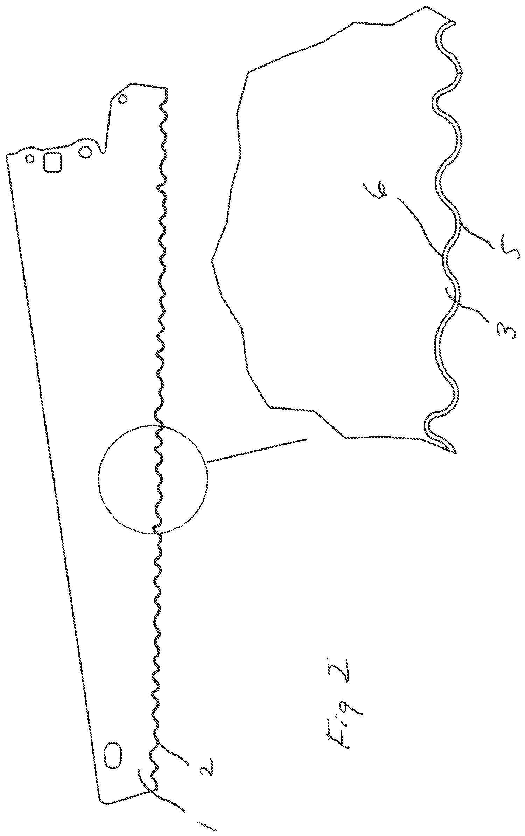

An additional embodiment of a saw blade according to the invention is seen in Figure 2. Here, the edge 2 has, in a main plane of extension of the saw blade 1 and prior to setting of the teeth 3, a modified sinusoidal shape for which the amplitude as well as the frequency and wavelength vary in a non-continuous way. Said parameters may also vary individually or in any combination, and in all cases continuously as well as non-continuously. If several parameters vary simultaneously, for instance, amplitude and frequency, both variations may be continuous or non-continuous or a first variation (no matter which) may be continuous while a second variation (no matter which) is non-continuous.

It should also be observed that, for each one of the mentioned embodiments, the edge 2 in the transition between each ridge 5 and valley 6 may have a local direction of extension that is angled approx. 0-90°, preferably approx. 10-80° and most preferably approx. 45° to the main direction of extension of the edge.

The teeth 3 are, for each one of the mentioned embodiments, alternately set, every second to the left and every second to the right, i.e., every second up from the plane of the paper and every second down under the plane of the paper in the partial enlargement in Figure 1 b. Of course, it is possible to conceive a number of other setting sequences, for instance, unset, set to the left, unset, set to the right, etc. recurrently. Observe that Figure 1c shows a variant having at least one tooth unset.

The saw blade 1 having the wave-shaped edge 2 saws insulating material such as "styrofoam" and mineral wool efficiently and causes a minimum of sawdust. The setting makes it easier for the blade to create sufficient free space during sawing so that the blade does not get caught. The fact that the edge 2 lacks sudden sharp local direction changes of the extension thereof also makes it easier for the blade to move freely during sawing and minimizes chip formation.

A saw according to the invention is provided with a blade according to the invention, and the blade may be fixedly mounted in a saw handle from the manufacturer but may also be detachably mounted in the handle. The saw may comprise equipment for machine sawing.

The wave-shaped edge 2 may also be present on saw blades for machine sawing, for instance, band saw blades, circular saw blades and compass saw blades.

The invention is not limited to the embodiments shown herein, but may be varied within the scope of the subsequent claims.

## Claims

1. Saw blade (1) with teeth (3), wherein at least one of said teeth (3) is set and that said teeth (3) have at least one continuously continuous sharp edge (2) that is common to the teeth, **characterized in that** said sharp edge, in a main plane of extension of the saw blade and prior to setting, has either a pure sinusoidal shape or a modified sinusoidal shape, whereby the sharp edge (2) is wave-shaped and lacks sudden sharp local direction changes along the extension of the saw blade.

2. Saw blade (1) according to claim 1, wherein the modified sinusoidal shape partly has a different amplitude than the pure sinusoidal shape.

3. Saw blade (1) according to claim 1, wherein the modified sinusoidal shape partly has a different frequency or a different wavelength than the pure sinusoidal shape.

4. Saw blade (1) according to claim 1, wherein the modified sinusoidal shape partly has a different amplitude and a different frequency or a different wavelength than the pure sinusoidal shape.

5. Saw blade according to claim 1, wherein at least one of said teeth (3) is set in one direction and at least one of said teeth (3) is set in the other direction.

6. Saw blade according to claim 1, wherein every second tooth (3) of said teeth (3) is set in one direction and every second tooth (3) of said teeth (3) is set in the other direction.

7. Saw blade according to claim 1, wherein, in a group of three sequencing teeth (3) of said teeth (3), one tooth is set in one direction, one tooth is set in the other direction and one tooth is unset.

8. Saw blade according to claim 1, wherein, in a group of four sequencing teeth (3) of said teeth (3), one tooth is set in one direction, one tooth is set in the other direction and two teeth are unset.

9. Saw blade according to claim 8, wherein, in a group of four sequencing teeth (3) of said teeth (3), a first tooth is unset, a second tooth is set in one direction, a third tooth is unset and a fourth tooth is set in the other direction.

10. Saw comprising at least one saw blade (1) according to any one of the claims 1-9.

11. Saw according to claim 10, which comprises at least one handle for handsawing.

12. Saw according to claim 11, wherein said at least one saw blade (1) is detachable from said at least one handle.

13. Saw according to claim 12, which comprises equipment for machine sawing.

## Patentansprüche

1. Sägeblatt (1) mit Zähnen (3), wobei wenigstens einer der Zähne (3) geschränkt ist und dass die Zähne (3) wenigstens eine durchgehend kontinuierliche scharfe Kante (2) aufweisen, die den Zähnen gemeinsam ist, **dadurch gekennzeichnet, dass** die scharfe Kante in einer Haupterstreckungsebene des Sägeblatts und vor dem Schränken entweder eine reine Sinusform oder eine modifizierte Sinusform aufweist, wodurch die scharfe Kante (2) wellenförmig ist und ihr entlang der Erstreckung des Sägeblatts plötzliche scharfe örtliche Richtungswechsel fehlen.

2. Sägeblatt (1) nach Anspruch 1, wobei die modifizierte Sinusform zum Teil eine andere Amplitude als die reine Sinusform aufweist.

3. Sägeblatt (1) nach Anspruch 1, wobei die modifizierte Sinusform zum Teil eine andere Frequenz oder eine andere Wellenlänge als die reine Sinusform aufweist.

4. Sägeblatt (1) nach Anspruch 1, wobei die modifizierte Sinusform zum Teil eine andere Amplitude und eine andere Frequenz oder eine andere Wellenlänge als die reine Sinusform aufweist.

5. Sägeblatt nach Anspruch 1, wobei wenigstens einer der Zähne (3) in einer Richtung geschränkt ist und wenigstens einer der Zähne (3) in der anderen Richtung geschränkt ist.

6. Sägeblatt nach Anspruch 1, wobei jeder zweite Zahn (3) der Zähne (3) in einer Richtung geschränkt ist und jeder zweite Zahn (3) der Zähne (3) in der anderen Richtung geschränkt ist.

7. Sägeblatt nach Anspruch 1, wobei in einer Gruppe von drei aufeinander folgenden Zähnen (3) der Zähne (3) ein Zahn in einer Richtung geschränkt ist, ein Zahn in der anderen Richtung geschränkt ist und ein Zahn nicht geschränkt ist.

8. Sägeblatt nach Anspruch 1, wobei in einer Gruppe von vier aufeinander folgenden Zähnen (3) der Zähne (3) ein Zahn in einer Richtung geschränkt ist, ein Zahn in der anderen Richtung geschränkt ist und zwei Zähne nicht geschränkt sind.

9. Sägeblatt nach Anspruch 8, wobei in einer Gruppe von vier aufeinander folgenden Zähnen (3) der Zähne (3) ein erster Zahn nicht geschränkt ist, ein zweiter Zahn in einer Richtung geschränkt ist, ein dritter Zahn nicht geschränkt ist und ein vierter Zahn in der anderen Richtung geschränkt ist.

10. Säge, umfassend wenigstens ein Sägeblatt (1) nach einem der Ansprüche 1 bis 9.

11. Säge nach Anspruch 10, die wenigstens einen Griff zum manuellen Sägen umfasst.

12. Säge nach Anspruch 11, wobei das wenigstens eine Sägeblatt (1) von dem wenigstens einen Griff lösbar ist.

13. Säge nach Anspruch 12, die eine Ausstattung zum maschinellen Sägen umfasst.

## Revendications

1. Lame de scie (1) dotée de dents (3), dans laquelle au moins l'une desdites dents (3) est orientée et lesdites dents (3) possèdent au moins une arête tranchante (2) continue de manière continue, commune aux dents, **caractérisée en ce que** ladite arête tranchante, dans un plan principal d'extension de la lame de scie et préalablement au placement, possède soit une forme sinusoïdale pure soit une forme sinusoïdale modifiée, où l'arête tranchante (2) est en forme d'onde et ne change pas soudainement et brutalement de direction locale le long de l'extension de la lame de scie.

2. Lame de scie (1) selon la revendication 1, dans laquelle la forme sinusoïdale modifiée possède partiellement une amplitude différente par rapport à la forme sinusoïdale pure.

3. Lame de scie (1) selon la revendication 1, dans laquelle la forme sinusoïdale modifiée possède partiellement une fréquence différente ou une longueur d'onde différente par rapport à la forme sinusoïdale pure.

4. Lame de scie (1) selon la revendication 1, dans laquelle la forme sinusoïdale modifiée possède partiellement une amplitude différente et une fréquence différente ou une longueur d'onde différente par rapport à la forme sinusoïdale pure.

5. Lame de scie selon la revendication 1, dans laquelle au moins l'une desdites dents (3) est orientée dans une direction et au moins l'une desdites dents (3) est orientée dans l'autre direction.

6. Lame de scie selon la revendication 1, dans laquelle chaque deuxième dent (3) desdites dents (3) est orientée dans une direction et chaque deuxième dent (3) desdites dents (3) est orientée dans l'autre direction.

7. Lame de scie selon la revendication 1, dans laquelle, dans un groupe de trois dents (3) successives desdites dents (3), une dent est orientée dans une direction, une dent est orientée dans l'autre direction et une dent n'est pas orientée.

8. Lame de scie selon la revendication 1, dans laquelle, dans un groupe de quatre dents (3) successives desdites dents (3), une dent est orientée dans une direction, une dent est orientée dans l'autre direction et deux dents ne sont pas orientées.

9. Lame de scie selon la revendication 8, dans laquelle, dans un groupe de quatre dents (3) successives desdites dents (3), une première dent n'est pas orientée, une deuxième dent est orientée dans une direction, une troisième dent n'est pas orientée et une quatrième dent est orientée dans l'autre direction.

10. Scie comprenant au moins une lame de scie (1) selon l'une quelconque des revendications 1 à 9.

11. Scie selon la revendication 10, comprenant au moins une poignée pour scier à la main.

12. Scie selon la revendication 11, dans laquelle ladite au moins une lame de scie (1) est détachable de ladite au moins une poignée.

13. Scie selon la revendication 12, comprenant un équipement pour scier à l'aide d'une machine.
